# EUROPEAN PATENT SPECIFICATION

(11) **EP 2 702 739 B1**
(45) Date of publication and mention of the grant of the patent: **25.04.2018**
(21) Application number: 12776439.7
(22) Date of filing: 27.04.2012
(51) Int. Cl.: H04M 11/06, H04B 3/32

(54) **SYSTEMS AND METHODS FOR G.VECTOR INITIALIZATION**
SYSTEME UND VERFAHREN ZUR G-VEKTOR-INITIALISIERUNG
SYSTÈMES ET PROCÉDÉS POUR INITIALISATION DE VECTEUR G.

(30) Priority: 27.04.2011 US 201161479764 P
(43) Date of publication of application: 05.03.2014
(73) Proprietor: Ikanos Communications, Inc., Fremont, CA 94538 (US)
(72) Inventor: MAHADEVAN, Amitkumar, Edison, NJ 08837 (US); FISHER, Kevin, D., Palo Alto, CA 94304 (US); SANDS, Nicholas, P., Menlo Park, CA 94025 (US)
(74) Representative: Jaeger, Michael David
(86) International application number: PCT/US2012/035600
(87) International publication number: WO 2012/149428

(56) References cited:
- EP-A1- 2 219 316
- US-A1- 2009 296 792
- US-A1- 2009 310 502
- US-A1- 2010 202 281
- US-A1- 2010 303 136
- US-A1- 2011 075 834
- JOCHEN MAES ET AL: "Pilot-based crosstalk channel estimation for vector-enabled VDSL systems", INFORMATION SCIENCES AND SYSTEMS (CISS), 2010 44TH ANNUAL CONFERENCE ON, IEEE, PISCATAWAY, NJ, USA, 17 March 2010 (2010-03-17), pages 1-6, XP031676334, ISBN: 978-1-4244-7416-5

## Description

### CROSS-REFERENCE TO RELATED APPLICATIONS

The present application claims priority to U.S. Prov. Appln. No. 61,479,764 filed April 27, 2011.

### FIELD OF THE INVENTION

Apparatus, systems, methods, techniques, etc. are disclosed for initializing DSL lines in a vectored DSL system and, in some embodiments, providing shorter time duration for initialization of one or more joining DSL lines as compared to earlier apparatus, systems, methods, etc.

### BACKGROUND OF THE INVENTION

Dynamic spectrum management level-3 (DSM3) or "vectoring" is a technique in DSL communication systems for mitigating the crosstalk inherent in twisted-pair networks by cancelling or precoding the signals from a multiplicity of collocated transceivers. Certain aspects of vectoring that can be considered background art are described in U.S. Patent Publ. No. 2009/0245340, U.S. Patent Publ. 2008/0049855, U.S. Patent Publ. No. 2010/0195478, U.S. Patent Publ. No. 2009/0271550, U.S. Patent Publ. No. 2009/0310502, U.S. Patent Publ. No. 2010/0046684 and U.S. Patent No. 7,843,949.

Among other things, the G.vector (G.993.5) standard provides a framework for actively cancelling far-end crosstalk (FEXT) among lines in the vectored DSL system. This framework provides for lines to non-disruptively join the vectored system by enabling estimation of coefficients for mitigating FEXT (a precoder for downstream transmissions and a post-canceller for upstream transmissions) from and into the initializing (i.e., joining) lines. This framework is created by introducing new phases (signaling as well as messaging) and modifying some of the existing phases of initialization provided by the G.993.2 (VDSL2) standard. The new signaling phases introduced by G. vector may be broadly partitioned into two groups. The first group is vector-1 signals. These consist of sync symbols only with intervening silence (i.e., the transmitter goes quiet between sync symbols). Additionally, a predefined binary pilot sequence modulates tones of the sync-symbols. The primary purpose of vector-1 signals is to enable mitigation coefficient estimation for FEXT from the joining line(s) into the lines that are already in Showtime. The second group is vector-2 signals. These consist of sync symbols modulated by a pilot sequence as well as regular symbols carrying the special-operations channel (SOC) messages. The primary purpose of vector-2 signals is to enable mitigation coefficient estimation for FEXT into the joining line(s) (from other joining lines as well as from lines that are already in Showtime).

A typical G.vector initialization involves six distinct and non-overlapping G.vector signaling phases: Four non-overlapping phases comprising 0-P-VECTOR 1, R-P-VECTOR 1, 0-P-VECTOR1-1 and R-P-VECTOR 1-1; One phase of overlapped 0-P-VECTOR 2 and R-P-VECTOR 1-2; and One phase of overlapped 0-P-VECTOR 2-1 and R-P-VECTOR 2.

Pilot sequences are provisioned in G.vector to enable the accurate estimation of FEXT mitigation coefficients between any pair of lines in the vectored system. The G.vector standard allows the vector control entity (VCE) to assign the pilot sequence to each line; however, it does not specify any details on the sequences that must be used (i.e. their choice, composition, etc. can be vendor-discretionary).

A common process uses a set of orthogonal sequences, wherein every user is assigned a unique sequence of length (or period) L. For a vectored system of N users, FEXT mitigation coefficients on a given tone (or sub-carrier) between any pair of users can be unambiguously resolved at the end of a pilot sequence period if L ≥ N. This suggests that the duration of the vector-1 or vector-2 phases must be at least L sync-symbols (with L ≥ N) to guarantee successful estimation of FEXT mitigation coefficients between any pair of users on a specific tone. In an exemplary vectored system with N = 512 users, where the system uses the pilot sequence process above, each new G.vector signaling phase must last at least 512 sync symbols (approximately 32 seconds for a 4kHz symbol-rate system). Thus, a typical G.vector initialization would require more than three minutes (6 phases x 32 seconds) of additional time over and above the time required for G.993.2 initialization (about 40 seconds). Three or four minutes for initializing a G.vector line before entering Showtime is highly undesirable from a customer perspective, and most of this type of delay would be due to additional time spent in the G.vector signaling phases. The problem can be further exacerbated when one pilot sequence period is insufficient to achieve vectored signal-to-noise ratio (SNR) performance that is reasonably close to ideal FEXT-free SNR due to the impact of noise in estimates of the FEXT mitigation coefficients, meaning multiple pilot-sequence periods may have to be accommodated in the G.vector signaling phases.

Accordingly, methods and apparatuses for reducing the time needed for G.vector initialization are desirable.

European patent document EP2219316A1 relates to a method for assigning pilot sequences to communication channels for evaluation of crosstalk characteristics.

US patent document US2010/0303136A1 discloses a method of channel estimation in a multi-channel communication system using pilot signals having quasiorthogonal subpilots.

"Pilot Based Crosstalk Channel Estimation for Vector-Enabled VDSL Systems" (J. Maes et al) discusses crosstalk channel estimation that exploits channel smoothness with the aid of frequency-dependent pilot sequences, as well as mechanisms that allow fast and simultaneous initialisation by targeted assignment of pilot sequences.

### SUMMARY OF THE INVENTION

Methods, apparatuses (e.g., DSL system hardware, DSL systems, vectoring control entities), techniques, systems, computer program products comprising a non-transitory computer-usable medium having control logic stored therein for causing a computer to manufacture a DSL system and/or one or more DSL components or devices for performing vectored digital subscriber line system (DSL) processing for transmissions on a DSL line, computer program products comprising a non-transitory computer-usable medium having control logic stored therein for causing a computer to manufacture a DSL system and/or one or more DSL components or devices for performing vectored digital subscriber line system (DSL) processing for transmissions on a DSL line, etc. are used for initializing one or more DSL lines joining a vectored DSL line group. A super-periodic orthogonal pilot sequence from a set of super-periodic orthogonal pilot sequences is assigned to each joining DSL line, wherein each such super-periodic orthogonal pilot sequence in the set has length Land is orthogonal to other sequences in the set over length T < L. These super-periodic orthogonal pilot sequences are used on the joining DSL lines to generate at least T sync- symbols worth of initialization data, which is processed to generate initialization data and FEXT mitigation coefficients for use when the joining DSL lines become part of the vectored DSL line group. Other variations, embodiments, etc. discussed herein are included.

In accordance with these and other aspects, a method for initializing a first joining DSL line and a second joining DSL line that are joining a first vectored DSL line group operating in Showtime according to embodiments of the invention includes: assigning a first super-periodic orthogonal pilot sequence to the first joining DSL line; assigning a second super-periodic orthogonal pilot sequence to the second joining DSL line, wherein the first and second super-periodic orthogonal pilot sequences have length L and are orthogonal over length T, wherein T < L; using the first and second super-periodic pilot sequences on the first and second joining DSL lines, respectively, to generate M sync-symbols worth of initialization data, wherein M ∼ T; and processing the generated initialization data to generate joining DSL line FEXT mitigation coefficients.

### BRIEF DESCRIPTION OF THE DRAWINGS

These and other aspects and features of the present invention will become apparent to those ordinarily skilled in the art upon review of the following description of specific embodiments of the invention in conjunction with the accompanying figures, wherein:
Fig. 1 is a flow diagram illustrating an example general initialization method according to embodiments of the invention.
Figs. 2-5 are flow diagrams illustrating one or more line joining methods, processes, techniques, etc. according to one or more DSL line initialization embodiments and/or implementations of the invention.
Fig. 6 is a schematic diagram illustrating one or more line joining methods, processes, techniques, etc. according to one or more DSL line initialization embodiments and/or implementations of the invention.
Fig. 7 is a DSL system implementing one or more line joining methods, processes, techniques, etc. according to one or more DSL line initialization embodiments and/or implementations of the invention.

### DETAILED DESCRIPTION OF THE PREFERRED EMBODIMENTS

The present invention will now be described in detail with reference to the drawings, which are provided as illustrative examples of the invention so as to enable those skilled in the art to practice the invention. Notably, the figures and examples below are not meant to limit the scope of the present invention to a single embodiment, but other embodiments are possible by way of interchange of some or all of the described or illustrated elements. Moreover, where certain elements of the present invention can be partially or fully implemented using known components, only those portions of such known components that are necessary for an understanding of the present invention will be described, and detailed descriptions of other portions of such known components will be omitted so as not to obscure the invention. Embodiments described as being implemented in software should not be limited thereto, but can include embodiments implemented in hardware, or combinations of software and hardware, and vice-versa, as will be apparent to those skilled in the art, unless otherwise specified herein. In the present specification, an embodiment showing a singular component should not be considered limiting; rather, the invention is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present invention encompasses present and future known equivalents to the known components referred to herein by way of illustration.

The following detailed description, including the Figures, will refer to one or more embodiments of the invention, but the invention is not limited to such example embodiments. Rather, the detailed description is intended only to be illustrative and to provide exemplary subject matter. Those skilled in the art will readily appreciate that the detailed description given with respect to the Figures is provided for explanatory purposes only. Apparatuses, systems, methods, techniques, etc. include and pertain to (but not limited to) improving initialization and other performance of and transmissions on a communication system, for example a DSL system or the like. Other methods, components, systems, structures, uses, etc. will be apparent to those skilled in the art after considering the following disclosure and the Figures provided herewith.

According to certain general aspects, embodiments of the invention provide apparatuses and/or methodologies to reduce the duration of initialization phase of G.vector modems as compared to earlier systems and the like. These apparatuses and/or methodologies are applicable to both upstream and downstream vectoring and leverage the messaging mechanisms provided by G.vector to permit implementation in any G.vector capable CPE without modifications to the April 2010 G.vector scheme.

As mentioned above, the conventional G.vector (G.993.5) standard provides a framework for the initialization of lines in a vectored DSL system in order to minimize disruption to lines that are already in Showtime and enjoying the benefits of far-end crosstalk (FEXT) cancellation. However, the present inventors recognize that this framework, which consists of new phases and modifications to some existing phases of initialization provided by the G.993.2 (VDSL2) standard, potentially increases initialization duration from ∼40 seconds for G.993.2 to ∼4 minutes for G.vector. Reducing such duration times of certain G.vector-specific initialization phases, while ensuring that FEXT from and into the initializing lines is adequately cancelled, represents a significant advancement in this field. This detailed description, taken in conjunction with the accompanying drawings, appendices and other disclosure information, describes apparatuses, systems, methods, techniques, etc. for initializing DSL lines, including initializing DSL lines joining a vectored system according to G.vector.

The present inventors further recognize that per G.vector, the VCE may specify the length of the downstream pilot sequence and upstream pilot sequence (they need not be the same) to a joining line only once. G.vector does not permit flexibility in changing the length of either pilot sequence once it has been specified. However, G.vector does provide the capability to change the bits of the pilot sequence for any line in Showtimedownstream as required (this is vendor specific) and upstream via the "pilot sequence update" command (G.vector Section 8.2). According to certain aspects, embodiments of G.vector initialization according to the invention described herein exploit this G.vector capability to reduce the time required for G.vector initialization.

Still further, the present inventors recognize that in normal operation of a vectored system, most lines are expected to be in Showtime enjoying vectored (near self-FEXT-free) performance. Some lines might occasionally retrain (i.e., pass through the initialization process again) in response to either customer-initiated actions (e.g., power-cycle of downstream-end CPE) or due to line conditions. However, only a handful of lines typically retrain simultaneously in this normal operating mode. Embodiments of G.vector initialization according to the invention described herein will refer to a group of DSL lines already in vectored operation in Showtime as a "Showtime line group (SLG)," the "Showtime lines," or the like. In such conditions, embodiments of G.vector initialization described herein can be implemented to reduce the initializing duration of joining lines, for example using the following processes or the like.

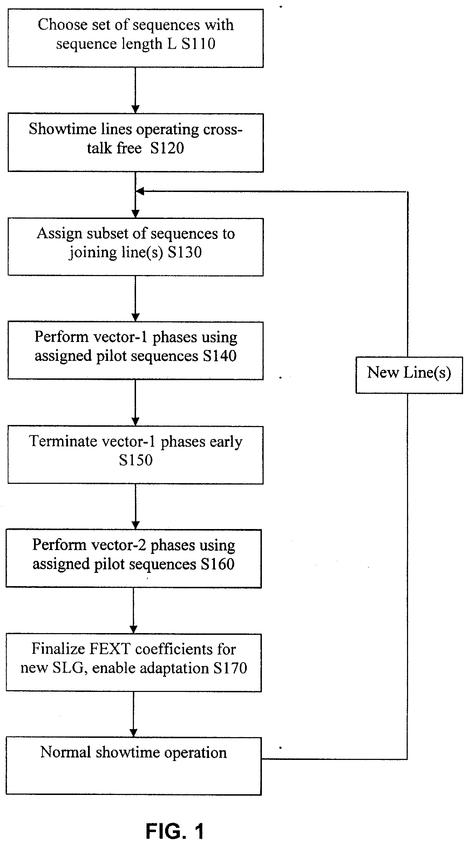

FIG. 1 illustrates an example process 100 utilizing one or more embodiments of G.vector initialization according to the invention. At step 110, where a pilot sequence has length L, some embodiments assign a set of orthogonal sequences for the vectored system such that a subset of sequences are orthogonal to each other over lengths that are smaller than L; that is, within the selected subset, a given pilot sequence segment is orthogonal to another pilot sequence segment, where both segments have length less than L. These subsets are referred to herein as "super-periodic" with period T < L. Typically, L needs to be greater than the maximum number of lines in the system, e.g. L = 384 for a 384 port device.

For example, in an exemplary embodiment having L = 8 and the following set of binary orthogonal sequences {S0 = ++++ ++++, S1 = +-+- +-+-, S2 = ++-- ++--, S3 = +--+ +--+, S4 = ++++ ----, S5 = +-+- -+-+, S6 = ++-- -- ++, S7 = +--+ -++-}, the two sequences in the subset {S0, S1} are orthogonal over a length of 2 (i.e., T= 2), while four sequences in the subset {S0, S1, S2, S3} are orthogonal over a length of 4 (i.e., T = 4). Thus, {S0, S1} and {S0, S1, S2, S3} are super-periodic subsets in this example.

As shown in step S120, typically there will be an existing group of showtime lines, i.e. the SLG, whose crosstalk mitigation coefficients are fully populated and updated. As typically occurs, one or more new lines request to join the SLG. Accordingly, G.vector initialization needs to be performed.

In contrast with the prior art, a novel approach to G.vector initialization is performed whenever new lines join. First, in step S130 a unique subset of pilot sequences is assigned to joining lines from the set of orthogonal sequences prepared in step S110, which pilot sequences can be determined based on the number of lines requesting to join the group. Optionally, a distinct subset of pilot sequences can also be applied to the showtime lines, where a specific pilot sequence in this distinct subset may be assigned to more than one showtime line.

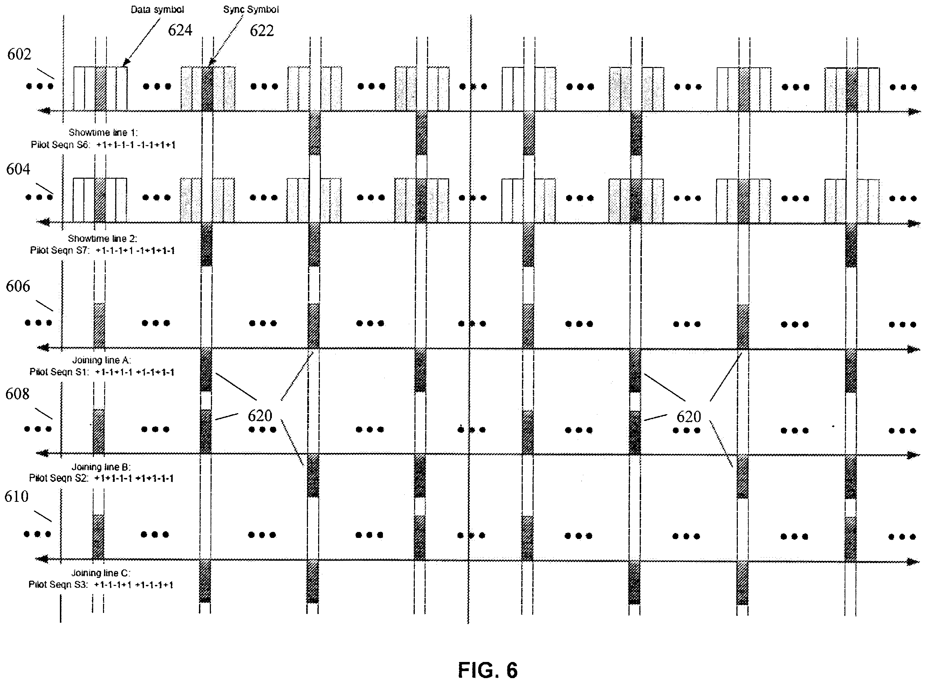

Next, in step S140, vector-1 initialization is performed for the joining lines only. FIG. 6 shows an example of how vector-1 initialization is performed when a distinct subset of pilot sequences has been assigned to two existing showtime lines, whose data signals are shown in plots 602 and 604. In this example, three lines (whose signals are shown in plots 606, 608 and 610) are requesting to join the showtime lines. According to aspects of the invention, the joining lines have been assigned pilot sequences S1, S2 and S3 as shown in plots 606, 608 and 610, respectively. As further shown in FIG. 6, during vector-1, these sequences are transmitted on the joining lines using sync-symbols 620, with silence in between sync-symbols. Meanwhile, on the showtime lines, pilot sequences S6 and S7 are transmitted on the sync-symbols 622 whereas data symbols 624 are also transmitted as usual.

According to aspects of the invention, as shown in step S150, vector-1 phases can be terminated much earlier than is possible in prior art approaches. After vector-1 initialization has been performed, the pilots are optionally reassigned in the SLG lines if they were previously assigned in step S130.

Next, in step S160, vector-2 initialization is performed on the joining lines, using the same pilot sequences that were assigned in step S140. Generally, no reduction in time is possible as compared to prior art approaches, however.

Finally in step S170, after the vector-1 and vector-2 phases are complete, the crosstalk mitigation coefficients for all of the showtime lines (which now include the joining lines) are estimated. Thereafter, the new SLG can keep operating with adaptation of coefficients enabled. As further shown in FIG. 1, whenever additional lines want to join, the process returns to step S130.

Aspects of the initialization techniques of the invention will now be described in more detail. For ease in illustrating aspects of the invention, in the following example descriptions, the maximum number of lines L =8, and the above set of pilot sequences {S0, S1, ... , S7} are being used. Moreover, the following example assumes that K=3 lines are requesting to join simultaneously. This example is only provided for illustrating techniques of the invention, and those skilled in the art will understand how to implement the invention using different numbers of maximum and/or joining lines.

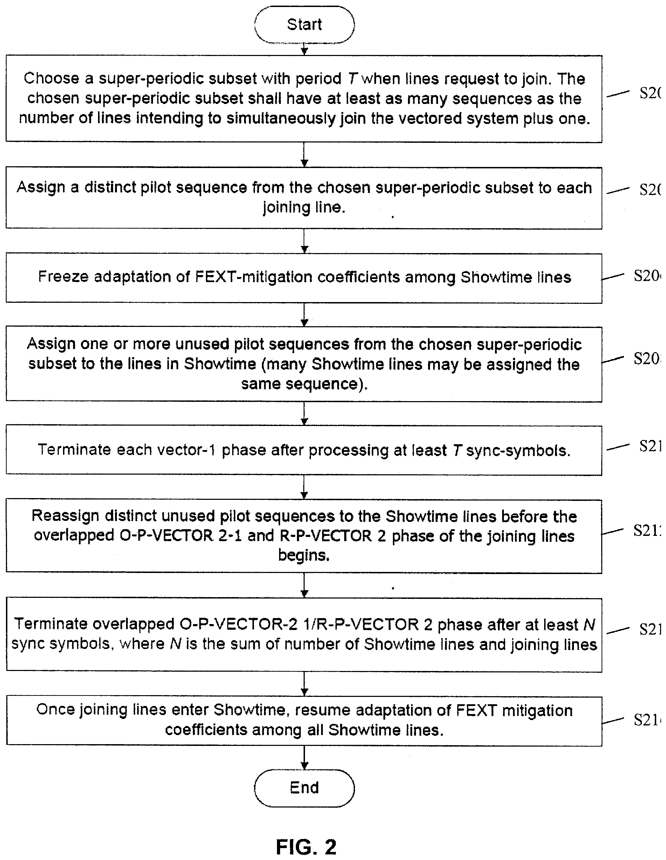

FIG. 2 illustrates a first example initialization process when one or more lines request to join a SLG.

As shown in FIG. 2, first, at step S202, when one or more DSL lines (e.g., K lines) request to join the vectored system, the VCE chooses a subset of super-periodic pilot sequences (e.g., K+1 sequences) from the entire prepared set such as that described above in connection with FIG. 1. For example, in a situation where L =8, and the above set of pilot sequences {S0, S1, ... , S7} are being used, and where K=3 lines are requesting to join simultaneously, then a subset of K+1=4 sequences S0, S1, S2, S3, is chosen from the above set {S0, S1, ... , S7}. According to aspects of the invention, these sequences will have a potentially shorter initialization period of T < L.

In step S204, K of the K+1 sequences S1, S2 and S3 are assigned to the three joining lines, respectively.

At step S206 adaptation of FEXT mitigation coefficients among DSL lines already in Showtime is frozen or turned off, which is acceptable since these lines' coefficients are expected to have converged.

In the embodiment of FIG. 2, in a next step S208, one or more remaining sequences in the selected chosen super-periodic subset (S0 in the above example) may be assigned to each of the Showtime lines. For upstream this can be carried out using the above-noted "pilot sequence update" mechanism provided by G.vector, while for downstream, this may be done as required without any explicit communication to the CPEs. The same sequence can be assigned to multiple Showtime lines. This guarantees orthogonality between the pilot sequence on each Showtime line and each of the joining lines and further assists in unambiguously resolving coefficients for mitigating FEXT from the joining lines into the Showtime lines.

In some additional or alternative embodiments, skipping this step may be justified if FEXT from Showtime lines into other Showtime lines is expected to be almost perfectly mitigated (i.e., sync symbol errors on Showtime lines are not expected to contain any contribution due to FEXT from other Showtime lines). In such cases, the pilot sequences transmitted by Showtime lines are inconsequential. (Here in fact, one or more Showtime lines could, in some embodiments, transmit the exact same pilot sequence as a joining line without significantly jeopardizing the estimation of coefficients for mitigation of FEXT from the joining lines into Showtime lines. That is, a Showtime line and a joining line can transmit the exact same pilot sequence during the vector-1 phases; in this case, any FEXT contribution arising from that pilot sequence can be completely attributed to the joining line, since FEXT from the Showtime line is assumed to be almost completely cancelled.)

At a next step S210 each vector-1 phase (e.g. non-overlapped phases 0-P-VECTOR 1, R-P-VECTOR 1, 0-P-VECTOR1-1 and R-P-VECTOR 1-1, and one phase of overlapped 0-P-VECTOR 2 and R-P-VECTOR 1-2) is sequentially performed and each can be terminated after receiving and processing only T sync-symbols worth of information (T = 4 in this example), rather than processing L = 8 sync-symbols worth of information according to earlier systems and processes.

It should be noted that coefficients estimated based on information from the smaller number of T sync-symbols may have a larger estimation error and/or cause larger SNR degradation of active lines as compared to coefficient estimates based on information from L sync-symbols (L > T). Hence, as will be appreciated by those skilled in the art, a compromise might be required between significant vector-1 phase duration reductions and associated SNR performance degradation of active lines. This compromise can be achieved in various ways - for example, by processing M ≥ T, by performing more than one training pass, etc. Certain examples will be illustrated in more detail below.

Returning to the example embodiment of FIG. 2, in a next step S212, pilot sequences for the Showtime lines in both downstream and upstream directions are reassigned at the end of the joining lines' vector-1 phases, so that each Showtime line gets a unique and distinct sequence from the set of orthogonal sequences before the overlapped O-P-VECTOR 2-1 and R-P-VECTOR 2 phase begins. The downstream pilot sequences may be updated any time after O-P-VECTOR 1-1, preferably before O-P-VECTOR 2, but at the latest before O-P-VECTOR 2-1. The upstream pilot sequences are updated immediately after R-P-VECTOR 1-2 and before information from R-P-VECTOR 2 is used for estimating coefficients for FEXT into the joining lines.

At step S214, initialization continues until the vector-2 phase is complete. For example, the overlapped O-P-VECTOR 2-1 and R-P-VECTOR 2 phase can be terminated after processing the information from a maximum of L sync-symbols with no reduction expected in the duration of this overlapped phase. However, as indicated in FIG. 2, it is possible for vector-2 to be completed after using only N (where N is the sum of showtime and joining lines) sync symbols, in which case a reduction of the duration of vector-2 phase may be expected.

Finally, at step S216, adaptation of FEXT coefficients for lines in SLG can be resumed.

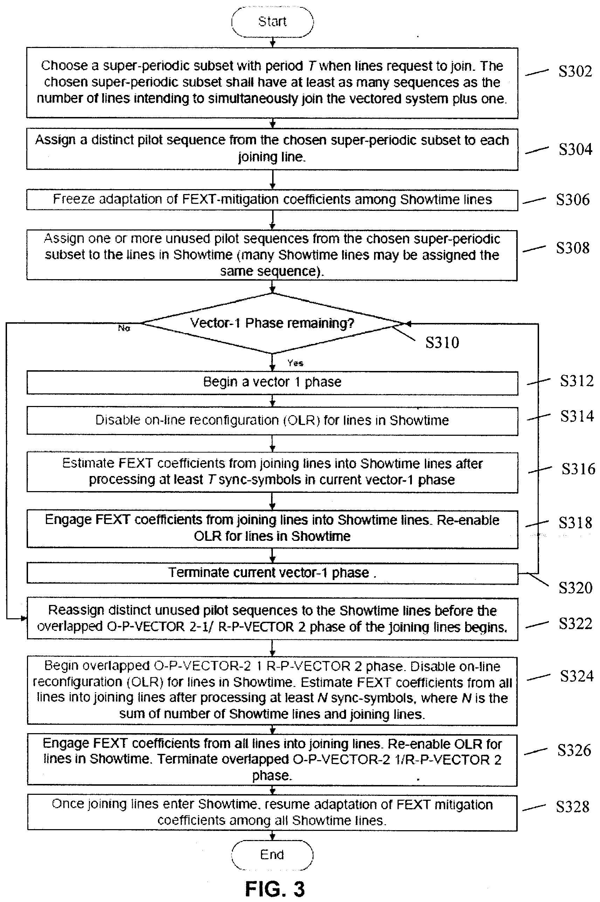

FIG. 3 illustrates another example initialization process when one or more lines request to join a SLG.

First, at step S302, when one or more DSL lines (e.g., K = 3 lines) request to join the vectored system, the VCE chooses a subset of super-periodic pilot sequences (e.g., K+1 sequences). For example, in a situation where L =8, and the above set of pilot sequences {S0, S1, ... , S7} are being used, and where K=3 lines are requesting to join simultaneously, then a subset of K+1=4 sequences S0, S1, S2, S3, is chosen from the above set {S0, S1, ... , S7}. According to aspects of the invention, these sequences will have a period of T < L.

In step S304, K of the K+1 sequences S1, S2 and S3 are assigned to the three joining lines, respectively.

At step S306 adaptation of FEXT mitigation coefficients among DSL lines already in Showtime is frozen or turned off, which is acceptable since these lines' coefficients are expected to have converged.

At a next step S308, one or more remaining sequences in the selected chosen super-periodic subset (S0 in the above example) may be assigned to each of the Showtime lines. For upstream this can be carried out using the above-noted "pilot sequence update" mechanism provided by G.vector, while for downstream, this may be done as required without any explicit communication to the CPEs. The same sequence can be assigned to multiple Showtime lines. This guarantees orthogonality between the pilot sequence on each Showtime line and each of the joining lines and further assists in unambiguously resolving coefficients for mitigating FEXT from the joining lines into the Showtime lines.

In step S310, it is determined whether any vector-1 phases of initialization remain to be performed. For example, the five vector-1 phases (e.g. non-overlapped phases 0-P-VECTOR 1, R-P-VECTOR 1, 0-P-VECTOR1-1 and R-P-VECTOR 1-1, and one phase of overlapped 0-P-VECTOR 2 and R-P-VECTOR 1-2) are sequentially performed one at a time.

In step S312, if all vector-1 phases have not yet been performed, the next one is started (or the first one if this is the first time vector-1 has been performed).

In step S314, online reconfiguration (OLR) mechanisms on the Showtime line group lines are disabled to ensure that there is no change in transmit power in the middle of a pilot sequence. This is preferably done because a mid-sequence change to the transmit power can potentially destroy orthogonality between different sequences.

In step S316, FEXT coefficients from joining lines into Showtime lines are estimated after processing at least T sync-symbols in the current vector-1 phase.

In step S318, FEXT coefficients from joining lines into Showtime lines are engaged. OLR is then re-enabled for lines in Showtime.

At step S320 the current vector-1 phase is terminated after receiving and processing only T sync-symbols worth of information (T=4 in this example), rather than processing L = 8 sync-symbols worth of information according to earlier systems and processes.

It should be noted, however, that coefficients estimated based on information from T sync-symbols may have a larger estimation error and/or cause larger SNR degradation of active lines as compared to coefficient estimates based on information from L sync-symbols (L > T). Hence, as will be appreciated by those skilled in the art, a compromise might be required between significant vector-1 phase duration reductions and associated SNR performance degradation of active lines. This compromise can be achieved in various ways - for example, by processing M ≥ T, by performing more than one training pass, etc., as will be described in more detail below.

Processing then returns to step S310 until all vector-1 phases of initialization have been performed.

In step S322, pilot sequences for the Showtime lines in both directions are reassigned at the end of the joining lines' vector-1 phases, so that each Showtime line gets a unique and distinct sequence from the set of orthogonal sequences before the overlapped OP-VECTOR 2-1 and R-P-VECTOR 2 phase begins. The downstream pilot sequences may be updated any time after O-P-VECTOR 1-1, preferably before O-P-VECTOR 2, but at the latest before O-P-VECTOR 2-1. The upstream pilot sequences are updated immediately after R-P-VECTOR 1-2 and before information from R-P-VECTOR 2 is used for estimating coefficients for FEXT into the joining lines.

At step S324, vector-2 initialization continues. For example, overlapped O-P-VECTOR-2 1 R-P-VECTOR 2 phase initialization is performed, and OLR is disabled for lines in Showtime. FEXT coefficients from all lines into joining lines are estimated after processing at least N sync-symbols, where N is the sum of the number of Showtime lines and joining lines.

At step S326, FEXT coefficients from all lines into joining lines are engaged and OLR is re-enabled for lines in Showtime. The overlapped O-P-VECTOR 2-1 and R-P-VECTOR 2 phase can then be terminated.

In step S328, once all joining lines enter Showtime, adaptation of FEXT mitigation coefficients among all Showtime lines can then be performed as usual.

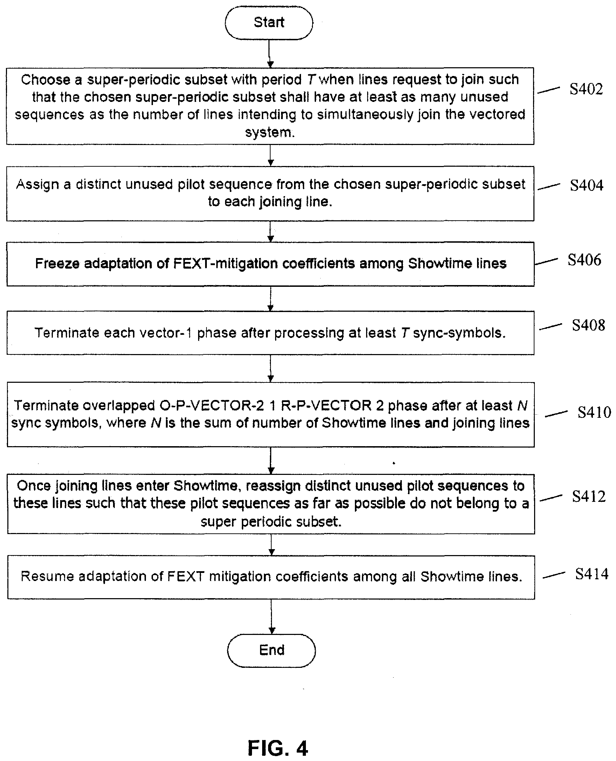

FIG. 4 illustrates another example initialization process when one or more lines request to join a SLG.

First, at step S402, when one or more DSL lines (e.g., K = 3 lines) request to join the vectored system, the VCE chooses a subset of super-periodic pilot sequences (e.g., K sequences, one being assigned to each joining DSL line). For example, in a situation where L =8, and the above set of pilot sequences {S0, S1, ... , S7} are being used, and where K=3 lines are requesting to join simultaneously, then a subset of K=3 sequences S1, S2, S3, is chosen from the above set {S0, S1, ..., S7}. According to aspects of the invention, these sequences will have a period of T < L.

In step S404, the sequences S1, S2 and S3 are assigned to the three joining lines, respectively.

At step S406 adaptation of FEXT mitigation coefficients among DSL lines already in Showtime is frozen or turned off, which is acceptable since these lines' coefficients are expected to have converged.

At a next step S408 each vector-1 phase (e.g. non-overlapped phases 0-P-VECTOR 1, R-P-VECTOR 1, 0-P-VECTOR1-1 and R-P-VECTOR 1-1, and one phase of overlapped 0-P-VECTOR 2 and R-P-VECTOR 1-2) is sequentially performed and each vector-1 phase can then be terminated after receiving and processing only T sync-symbols worth of information (T = 4 in this example), rather than processing L = 8 sync-symbols worth of information according to earlier systems and processes.

It should be noted, however, that coefficients estimated based on information from T sync-symbols may have a larger estimation error and/or cause larger SNR degradation of active lines as compared to coefficient estimates based on information from L sync-symbols (L > T). Hence, as will be appreciated by those skilled in the art, a compromise might be required between significant vector-1 phase duration reductions and associated SNR performance degradation of active lines. This compromise can be achieved in various ways - for example, by processing M ≥ T, by performing more than one training pass, etc., as will be described in more detail below.

At step S410 initialization continues with vector-2 phases until they are completed. For example, the overlapped O-P-VECTOR 2-1 and R-P-VECTOR 2 phase can be terminated after processing the information from N sync-symbols, where N is the sum of the number of Showtime lines and joining lines.

Next in step S412, in the embodiment of FIG. 4, it is useful to ensure that, as far as possible, Showtime lines are assigned pilot sequences that are not super-periodic. For example, if four lines are in Showtime, sequences S4, S5, S6, and S7, respectively, from step 110 can be assigned to these four lines, thus minimizing the need to reassign pilot sequences to Showtime lines when new lines join the system, and ensuring that the super-periodic pilot-sequences are available for the lines that might join in the future.

Finally, in step S414, adaptation of FEXT mitigation coefficients among all Showtime users can be resumed.

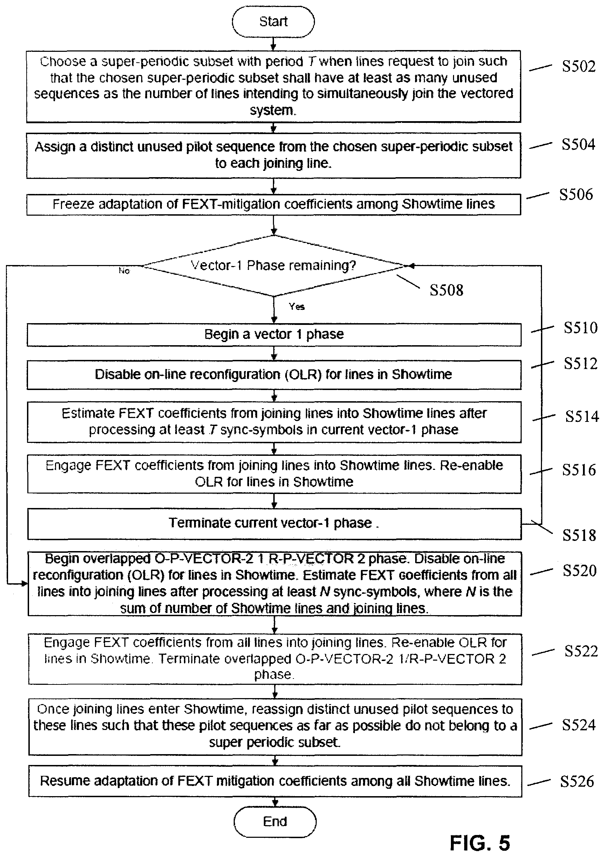

FIG. 5 illustrates another example initialization process when one or more lines request to join a SLG.

First, at step S502, when one or more DSL lines (e.g., K=3 lines) request to join the vectored system, the VCE chooses a subset of super-periodic pilot sequences (e.g., K sequences, one being assigned to each joining DSL line). For example, in a situation where L =8, and the above set of pilot sequences {S0, S1, ... , S7} are being used, and where K=3 lines are requesting to join simultaneously, then a subset of K=3 sequences S1, S2, S3, is chosen from the above set {S0, S1, ... , S7}. According to aspects of the invention, these sequences will have a period of T < L.

In step S504, the sequences S1, S2 and S3 are assigned to the three joining lines, respectively.

At step S506 adaptation of FEXT mitigation coefficients among DSL lines already in Showtime is frozen or turned off, which is acceptable since these lines' coefficients are expected to have converged.

In step S508, it is determined whether any vector-1 phases of initialization remain to be performed. For example, the five vector-1 phases (e.g. non-overlapped phases 0-P-VECTOR 1, R-P-VECTOR 1, 0-P-VECTOR1-1 and R-P-VECTOR 1-1, and one phase of overlapped 0-P-VECTOR 2 and R-P-VECTOR 1-2) are sequentially performed one at a time.

In step S510, if all vector-1 phases have not yet been performed, the next one is started (or the first one if this is the first time vector-1 has been performed).

In step S512, online reconfiguration (OLR) mechanisms on the Showtime line group lines are disabled to ensure that there is no change in transmit power in the middle of a pilot sequence. This is preferably done because a mid-sequence change to the transmit power can potentially destroy orthogonality between different sequences.

In step S514, FEXT coefficients from joining lines into Showtime lines are estimated after processing at least T sync-symbols in the current vector-1 phase.

In step S516, FEXT coefficients from joining lines into Showtime lines are engaged and OLR is re-enabled for lines in Showtime.

At step S518 each vector-1 phase can then be terminated after receiving and processing only T sync-symbols worth of information (T=4 in this example), rather than processing L = 8 sync-symbols worth of information according to earlier systems and processes.

It should be noted, however, that coefficients estimated based on information from T sync-symbols may have a larger estimation error and/or cause larger SNR degradation of active lines as compared to coefficient estimates based on information from L sync-symbols (L > T). Hence, as will be appreciated by those skilled in the art, a compromise might be required between significant vector-1 phase duration reductions and associated SNR performance degradation of active lines. This compromise can be achieved in various ways - for example, by processing M ≥ T, by performing more than one training pass, etc., as will be described in more detail below.

After the current vector-1 phase is completed, processing returns to step S508 for performing all vector-1 phases.

At step S520, initialization continues with vector-2. For example, the overlapped O-P-VECTOR-2 1 R-P-VECTOR 2 phase is now performed after OLR for lines in Showtime is disabled. FEXT coefficients from all lines into joining lines are estimated after processing at least N sync-symbols, where N is the sum of number of Showtime lines and joining lines.

At step S522, the FEXT coefficients from all lines into joining lines are engaged and OLR is re-enabled for lines in Showtime. The overlapped O-P-VECTOR 2-1 and R-P-VECTOR 2 phase can be terminated.

In step S524, once joining lines enter Showtime, the usual adaptation of FEXT mitigation coefficients among all Showtime lines can be resumed.

In one or more examples herein, L is 2 or multiples of 4 (e.g., L=8, above). This is permitted using current versions of G.vector. However, in general, embodiments hereunder are not restricted to L being 2 or multiples of 4, as long as super-periodic subsets of L exist.

It should be noted that a cold-start scenario occurs when no lines are in Showtime and the first group of lines is in the process of initialization. Such a scenario may occur after a power outage or scheduled maintenance at the CO side. In such a case, no coefficient estimation is necessary in the vector-1 signaling phases and these phases may be restricted to their minimum duration as specified by G.vector, thereby reducing the initialization duration for the first group of joining lines.

As discussed in the example processes above, rather than terminating after only N sync-symbols in some embodiments, duration of the vector-1 phases might need to be extended to non-trivial multiples of T (i.e., nT symbols where n belongs to {2, 3, ... }) in order to limit SNR degradation due to coefficient estimation error. In such cases, an initial estimate of coefficient based on information from T sync-symbols can be generated and then updated using the remaining (n-1) periods of T symbols.

Various updating processes, techniques, etc. can be implemented. A sync-symbol by sync-symbol least mean squares (LMS) update may be used, which requires the updated coefficient to be engaged in the signal path before the next update is performed. However, the process of repeatedly engaging updated coefficients into the signal path after every sync-symbol poses challenges from the standpoint of implementation speed, which may conspire to further extend the duration of the updating process.

An alternative method is the so-called "batch update" which also can be implemented in embodiments of the invention. In this method, the same computations that were used to compute initial estimates over T sync symbols are used again after the initial estimates are engaged. However, with the initial estimates already engaged, repeating the computations over T sync symbols yields estimates of the residual FEXT coefficients. These residual FEXT coefficients are then added to the initial estimates to generate updated estimates. An advantage of this batch update approach over the sync-symbol by sync-symbols LMS is that updated coefficients need to be engaged only after every T sync symbols, which relaxes the requirement on the speed of engaging the coefficients into the signal path.

Such batch-update approaches for FEXT mitigation coefficients (downstream precoder or upstream canceller) allow these coefficients to be tracked over time while reducing the frequency of engaging the updated coefficients, i.e., writing the updated coefficients from software to hardware. Such batch update approaches provide a realistic way to use information on consecutive sync-symbols to update FEXT mitigation coefficients during G. vector initialization of lines, thereby reducing the duration of the initialization.

Using one or more embodiments of the G.vector initialization apparatuses, systems, methods, techniques, etc. herein, the duration of the initialization phase of G.vector DSL modems can be reduced when compared to earlier systems. These advantages are realized for both upstream and downstream vectoring. Moreover, no modification of G.vector as it stands in April 2010 is required.

Those skilled in the art will recognize how to adapt existing known and proprietary DSL vectoring systems to implement the G.vector initialization techniques of the present invention. For example, after being taught by the present disclosures, those skilled in the art will understand how to implement the techniques of the invention in one or more of the systems described in U.S. Patent Publ. No. 2009/0245340, U.S. Patent Publ. 2008/0049855, U.S. Patent Publ. No. 2010/0195478, U.S. Patent Publ. No. 2009/0271550, U.S. Patent Publ. No. 2009/0310502, U.S. Patent Publ. No. 2010/0046684 and U.S. Patent No. 7,843,949.

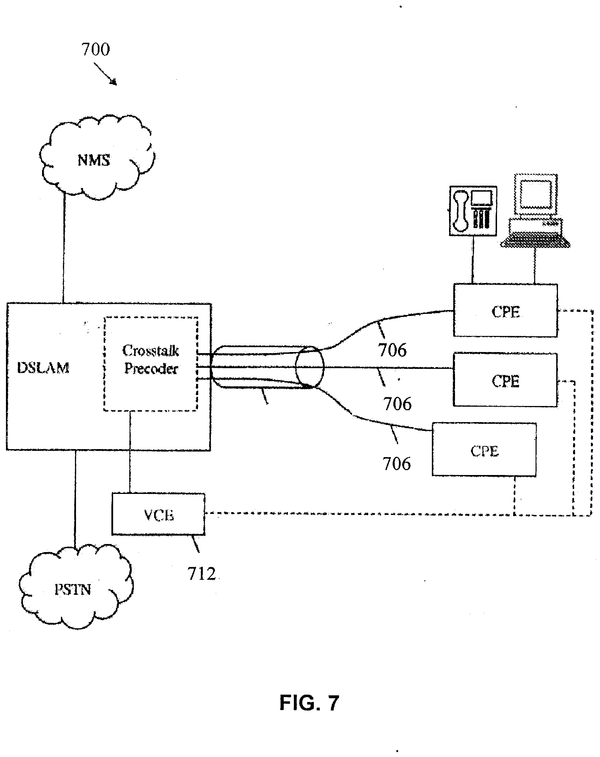

Nevertheless, FIG. 7 illustrates an example DSL system 700 that can implement G.vector initialization according to the embodiments of the invention described herein. In this example system, DSL lines 706 can be part of a Showtime line group or some or all can be joining lines. The management unit 712 can be a VCE that assigns pilot sequences as needed during reduced-time initialization according to one or more embodiments.

Although the present invention has been particularly described with reference to the preferred embodiments thereof, it should be readily apparent to those of ordinary skill in the art that changes and modifications in the form and details may be made without departing from the scope of the invention. For example, since numerous modifications and changes to the above descriptions will readily occur to those skilled in the art, reduced-time G.vector initialization is not limited to the exact implementation, construction and/or operation illustrated and described herein. Therefore, the described embodiments should be taken as illustrative, and it is intended that the appended claims encompass such changes and modifications.

## Claims

1. A method of initializing a first joining DSL line (706) and a second joining DSL line (706) that are joining a first vectored DSL line group operating in Showtime, the method comprising:
assigning a first super-periodic orthogonal pilot sequence to the first joining DSL line (706);
assigning a second super-periodic orthogonal pilot sequence to the second joining DSL line (706), wherein the first and second super-periodic orthogonal pilot sequences have length L symbols and are orthogonal over length T symbols, wherein T<L;
using the first and second super-periodic pilot sequences on the first and second joining DSL lines (706), respectively, to generate M sync-symbols (620, 622) worth of initialization data, wherein M≈T; and
processing the generated initialization data to generate joining DSL line (706) FEXT mitigation coefficients.

2. The method of claim 1 further comprising using the generated FEXT mitigation coefficients to operate the vectored DSL line group.

3. The method of claim 1 further comprising disabling FEXT mitigation coefficient updating in the first vectored DSL line group prior to using the first and second superperiodic pilot sequences to generate the initialization data.

4. The method of claim 1 further comprising disabling any online reconfiguration in the first vectored DSL line group prior to using the first and second super-periodic pilot sequences to generate the initialization data.

5. The method of claim 1 further comprising assigning a third super-periodic orthogonal pilot sequence to one or more DSL lines (706) in the first vectored DSL line group prior to using the first and second super-periodic pilot sequences to generate the initialization data, wherein the first, second and third super-periodic orthogonal pilot sequences have length L and are orthogonal over length T<L.

6. The method of claim 5 further comprising reassigning Showtime orthogonal pilot sequences to DSL lines (706) in a second vectored DSL line group comprising the first vectored DSL line group and the first and second joining DSL lines (706).

7. The method of claim 1 further comprising adjusting the length M to be greater than T to improve estimation error and/or SNR degradation.

8. The method of claim 6 wherein the reassigned Showtime orthogonal pilot sequences are not super-periodic.

9. The method of claim 1 wherein L is 2 or a multiple of 4 symbols.

10. The method of claim 1 wherein T is 2 or a multiple of 4 symbols.

11. The method of claim 1, wherein the using and processing steps are performed during a vector 1 phase of initialization according to G.vector.

12. The method of claim 1 wherein using the first and second super-periodic pilot sequences on the first and second joining DSL lines (706), respectively, to generate M sync-symbols (620, 622) worth of initialization data further comprises generating M=nT sync-symbols (620, 622) worth of initialization data, wherein n is an integer.

13. The method of claim 1 further comprising assigning a new pilot sequence to each Showtime line group line after completion of the joining DSL lines' (706) joining the Showtime line group.

14. A vectoring control entity VCE configured to implement the method of claim 1.

## Patentansprüche

1. Verfahren zum Initialisieren einer ersten beitretenden DSL-Leitung (706) und einer zweiten beitretenden DSL-Leitung (706), die einer ersten vektorisierten DSL-Leitungsgruppe, die sich im Showtime-Betrieb befindet, beitreten, wobei das Verfahren umfasst:
Zuweisen einer ersten superperiodischen orthogonalen Pilotsequenz zu der ersten beitretenden DSL-Leitung (706);
Zuweisen einer zweiten superperiodischen orthogonalen Pilotsequenz zu der zweiten beitretenden DSL-Leitung (706), wobei die erste und die zweite superperiodische orthogonale Pilotsequenz Symbole der Länge L haben und orthogonal zu Symbolen der Länge Tn sind, wobei T<L;
Verwenden der ersten und der zweiten superperiodischen Pilotsequenz auf der ersten beziehungsweise zweiten beitretenden DSL-Leitung (706), um Initialisierungsdaten im Umfang von M Sync-Symbolen (620, 622) zu erzeugen, wobei M≈T; und
Verarbeiten der erzeugten Initialisierungsdaten, um Beitretende-DSL-Leitung- (706) -FEXT-Abschwächungskoeffizienten zu erzeugen.

2. Verfahren nach Anspruch 1, das ferner umfasst, die erzeugten FEXT-Abschwächungskoeffizienten zum Betreiben der vektorisierten DSL-Leitungsgruppe zu verwenden.

3. Verfahren nach Anspruch 1, das ferner umfasst, eine FEXT-Abschwächungskoeffizienten-Aktualisierung in der ersten vektorisierten DSL-Leitungsgruppe vor der Verwendung der ersten und der zweiten superperiodischen Pilotsequenz zum Erzeugen der Initialisierungsdaten zu deaktivieren.

4. Verfahren nach Anspruch 1, das ferner umfasst, jede Online-Neukonfiguration in der ersten vektorisierten DSL-Leitungsgruppe vor der Verwendung der ersten und der zweiten superperiodischen Pilotsequenz zum Erzeugen der Initialisierungsdaten zu deaktivieren.

5. Verfahren nach Anspruch 1, das ferner umfasst, einer oder mehr DSL-Leitungen (706) in der ersten vektorisierten DSL-Leitungsgruppe vor der Verwendung der ersten und der zweiten superperiodischen Pilotsequenz zum Erzeugen der Initialisierungsdaten eine dritte superperiodische orthogonale Pilotsequenz zuzuweisen, wobei die erste, die zweite und die dritte superperiodische orthogonale Pilotsequenz eine Länge L haben und orthogonal zu Länge T<L sind.

6. Verfahren nach Anspruch 5, das ferner umfasst, orthogonale Showtime-Pilotsequenzen zu DSL-Leitungen (706) in einer zweiten vektorisierten DSL-Leitungsgruppe neu zuzuweisen, die die erste vektorisierte DSL-Leitungsgruppe und die erste und die zweite beitretende DSL-Leitung (706) umfasst.

7. Verfahren nach Anspruch 1, das ferner umfasst, die Länge M so anzupassen, dass dieselbe größer als T ist, um einen Schätzfehler und/oder eine Verschlechterung des Signal-Rausch-Verhältnisses (SNR) zu verbessern.

8. Verfahren nach Anspruch 6, wobei die neu zugewiesenen orthogonalen Showtime-Pilotsequenzen nicht superperiodisch sind.

9. Verfahren nach Anspruch 1, wobei L = 2 oder einem Vielfachen von 4 Symbolen ist.

10. Verfahren nach Anspruch 1, wobei T = 2 oder einem Vielfachen von 4 Symbolen ist.

11. Verfahren nach Anspruch 1, wobei die Verwendungs- und Verarbeitungsschritte während einer Vektor-1-Phase der Initialisierung gemäß G.vector durchgeführt werden.

12. Verfahren nach Anspruch 1, wobei die Verwendung der ersten und der zweiten superperiodischen Pilotsequenz auf der ersten beziehungsweise zweiten beitretenden DSL-Leitung (706) zum Erzeugen von Initialisierungsdaten im Umfang von M Sync-Symbolen (620, 622) ferner umfasst, Initialisierungsdaten im Umfang von M=nT Sync-Symbolen (620, 622) zu erzeugen, wobei n eine ganze Zahl ist.

13. Verfahren nach Anspruch 1, das ferner umfasst, jeder Showtime-Leitungsgruppen-Leitung nach Abschluss des Beitritts der beitretenden DSL-Leitungen (706) zu der Showtime-Leitungsgruppe eine neue Pilotsequenz zuzuweisen.

14. Vektorisierungs-Steuereinheit VCE, die zum Implementieren des Verfahrens nach Anspruch 1 ausgebildet ist.

## Revendications

1. Procédé d'initialisation d'une première ligne DSL de jonction (706) et d'une seconde ligne DSL de jonction (706) qui joignent un premier groupe de lignes DSL vectorisées fonctionnant dans Showtime, le procédé comprenant :
l'attribution d'une première séquence super-périodique orthogonale de pilotes à la première ligne DSL de jonction (706) ;
l'attribution d'une deuxième séquence super-périodique orthogonale de pilotes à la seconde ligne DSL de jonction (706), dans lequel les première et deuxième séquences super-périodiques orthogonales de pilotes ont des symboles de longueur L et sont orthogonales sur des symboles de longueur T, dans lequel T < L ;
l'utilisation des première et deuxième séquences super-périodiques de pilotes respectivement sur les première et seconde lignes DSL de jonction (706) pour générer M symboles de synchronisation (620, 622) ayant valeur de données d'initialisation, dans lequel M ≈ T ; et
le traitement des données d'initialisation générées pour générer des coefficients d'atténuation de FEXT de lignes DSL de jonction (706).

2. Procédé selon la revendication 1 comprenant en outre l'utilisation des coefficients d'atténuation de FEXT générés pour faire fonctionner le groupe de lignes DSL vectorisées.

3. Procédé selon la revendication 1 comprenant en outre la désactivation d'une mise à jour de coefficients d'atténuation de FEXT dans le premier groupe de lignes DSL vectorisées avant l'utilisation des première et deuxième séquences super-périodiques de pilotes pour générer les données d'initialisation.

4. Procédé selon la revendication 1 comprenant en outre la désactivation de toute reconfiguration en ligne dans le premier groupe de lignes DSL vectorisées avant l'utilisation des première et deuxième séquences super-périodiques de pilotes pour générer les données d'initialisation.

5. Procédé selon la revendication 1 comprenant en outre l'attribution d'une troisième séquence super-périodique orthogonale de pilotes à une ou plusieurs lignes DSL (706) dans le premier groupe de lignes DSL vectorisées avant l'utilisation des première et deuxième séquences super-périodiques de pilotes pour générer les données d'initialisation, dans lequel les première, deuxième et troisième séquences super-périodiques orthogonales de pilotes ont une longueur L et sont orthogonales sur la longueur T < L.

6. Procédé selon la revendication 5 comprenant en outre la réattribution de séquences orthogonales de pilotes dans Showtime à des lignes DSL (706) dans un second groupe de lignes DSL vectorisées comprenant le premier groupe de lignes DSL vectorisées et les première et seconde lignes DSL de jonction (706).

7. Procédé selon la revendication 1 comprenant en outre l'ajustement de la longueur M pour qu'elle soit supérieure à T pour améliorer l'erreur d'estimation et/ou la dégradation du SNR.

8. Procédé selon la revendication 6 dans lequel les séquences orthogonales de pilotes dans Showtime réattribuées ne sont pas super-périodiques.

9. Procédé selon la revendication 1 dans lequel L est 2 ou un multiple de 4 symboles.

10. Procédé selon la revendication 1 dans lequel T est 2 ou un multiple de 4 symboles.

11. Procédé selon la revendication 1, dans lequel les étapes d'utilisation et de traitement sont réalisées durant une phase d'initialisation de vecteur 1 selon le vecteur G.

12. Procédé selon la revendication 1 dans lequel l'utilisation des première et deuxième séquences super-périodiques de pilotes respectivement sur les première et seconde lignes DSL de jonction (706) pour générer M symboles de synchronisation (620, 622) ayant valeur de données d'initialisation comprend en outre la génération de M = nT symboles de synchronisation (620, 622) ayant valeur de données d'initialisation, dans lequel n est un nombre entier.

13. Procédé selon la revendication 1 comprenant en outre l'attribution d'une nouvelle séquence de pilotes à chaque ligne de groupe dans Showtime après que les lignes DSL de jonction (706) ont fini de rejoindre le groupe de lignes dans Showtime.

14. Entité de commande de vectorisation VCE configurée pour mettre en oeuvre le procédé selon la revendication 1.
